# EUROPEAN PATENT APPLICATION

(11) **EP 3 130 998 A1**
(43) Date of publication of application: **15.02.2017**
(21) Application number: 15180461.4
(22) Date of filing: 11.08.2015
(51) Int. Cl.: G06F 3/0488, G06F 3/0482

(54) **A METHOD AND A SYSTEM FOR CONTROLLING A TOUCH SCREEN USER INTERFACE**

(71) Applicant: Advanced Digital Broadcast S.A., 1292 Chambesy (CH)
(72) Inventor: Dabrowski, Bartosz, 65-119 Zielona Gora (PL)
(74) Representative: Eupatent.pl

(57) **Abstract**

A method for controlling a touch screen user interface, comprising the steps of: receiving (101) an indication that a touch input has been initiated via the user interface; monitoring (102) the touch input until the touch is paused (103), broken (104) or a new touch point is added (105) to recognize a first component command; continuing to monitor (106) further touch input to recognize (107) a second component command (107); determining (108) a combined command related to the first component command and the second component command; and performing (109) an action associated with the determined combined command.

## Description

### TECHNICAL FIELD

The present invention relates to controlling a touch screen user interface.

### BACKGROUND

With the popularization of mobile devices, the touch or multi-touch interface is becoming more popular. Hence, there is a need to improve the ways to control touch or multi-touch interface in an effective manner.

A touch device is typically referred to as a device whose control is realized, but not limited to, by giving commands or selecting objects or the like that are displayed on a screen by the means of touching that screen (i.e. touch commands or touch gestures). A multi-touch device is typically referred to as a touch device that can accept and process two or more of the touch commands at once. A touch point is typically referred to as a point of touching of a touch device with a finger, a stylus, a capacitive pen or the like. Adding a touch point is typically referred to as the action of placing the finger, stylus, capacitive pen or the like on the touch device so that it touches its surface. Breaking a touch point is typically referred to as the action of moving the touching finger, stylus, capacity pen or the like away from the touch device so that it does not touch the screen of the device any more.

The known devices provide a variety of commands that allow for interaction with the objects displayed on a multi-touch screen. These include the following: a tap (touching the screen for a short time only), a two-finger tap (touching the screen for a short time only in two points simultaneously), a drag (touching an object on the screen, keeping the touch and moving the touch point to another location), a pinch (touching the screen at two places, keeping the touch and then moving the two touch points closer to each other), a zoom or a pinch out (touching the screen at two places, keeping the touch and then moving the two touch points further apart from each other), a flick (touching the screen and immediately moving the touch point sidewards).

Each of these commands allows manipulating objects displayed on the screen, but by performing only one action at a time. If the command is interrupted, it may leave the user interface handling this command in an undefined state. It is clear to one skilled in the art that e.g. dragging is a particularly long process that involves locating the object on screen, touching and holding it and then placing at the target position without breaking the touch point. Furthermore, locating of the object may be difficult for the user due to a small size of the screen or the object or other quality inherent to the object like animation, color or the like. Hence, in a situation where an object is being dragged on the screen, it may happen that the target location may e.g. be not visible on the screen. In such case the drag command needs to be interrupted before being finished, the view of the screen needs to be adjusted by the user and the action needs to be restarted.

For example, a music player application on a smartphone may comprise a play list containing a multitude of music pieces. The user of the player application may typically drag one of the pieces of music to a different position by using a drag command. However, during the drag, the user may notice that the piece being dragged should belong to a different list than the presently displayed list. In order to move that piece to the other list, the user needs to lift the finger to interrupt the drag. This typically poses one of two results. Either the dragged item is dropped at the present position (which is not the intended target position) or the item is reverted to its original position. Both states are undesired from the point of view of the user. As a consequence, the user needs to locate the item again, access its context options and perform further manipulations to move the piece to a desired list.

There are known some alternative solutions to the aforementioned situation.

A US patent application US20100162181 presents a method to change parameters of a multi-touch command by interpreting the introduction or removal of an additional touch point while the command is still in progress. When applied to the music player application as described above, it could allow quickening the scrolling speed by adding or removing a second touch point during the dragging motion. However, such solution requires certain fluency and dexterity in handling the command in order to achieve the desired effects.

There is a need to provide an alternative touch interface that would at least partially eliminate the drawbacks of the present touch interfaces, by introducing a more static solution that requires less fluency or dexterity in handling multi-touch commands.

### SUMMARY

The method according to the present invention allows combining two or more component touch commands into a single combined command to allow increased functionality to the user of the multi-touch device, by presenting the user with a context menu and allowing selecting of a desired action from the menu.

The object of the invention is a method for controlling a touch screen user interface, comprising the steps of: receiving an indication that a touch input has been initiated via the user interface; monitoring the touch input until the touch is paused, broken or a new touch point is added to recognize a first component command; continuing to monitor further touch input to recognize a second component command; determining a combined command related to the first component command and the second component command; and performing an action associated with the determined combined command.

Preferably, the action associated with the determined combined command is selected as a function of at least one variables selected from the group consisting of: the position of the touch point at the beginning, end or during the first or second touch command; the relative position of any two or more touch points at the beginning, end or during the first or second touch command; the context of an application executed at the device.

Preferably, the pausing of a touch or the breaking of a touch point or addition of a new touch point are considered as initiation of the second component command and form part of the second component command.

Preferably, the method further comprises, after performing the action associated with the determined combined command, receiving an indication that a further touch input has been initiated via the user interface and monitoring the further touch input until the touch is paused, broken or a new touch point is added.

Preferably, the first component command is a single touch command.

Preferably, the first component command is a multi-touch command.

Preferably, the second component command is a single touch command.

Preferably, the second component command is a multi-touch command.

The object of the invention is also a computer program comprising program code means for performing all the steps of the method described above, as well as a computer readable medium storing computer-executable instructions performing all the steps of the method as described above.

The object of the invention is also a device comprising a touch screen user interface operable by a user interface controller, wherein the user interface controller is configured to execute all the steps of the method as described above.

### BRIEF DESCRIPTION OF DRAWINGS

Further details and features of the present invention, its nature and various advantages will become more apparent from the following detailed description of the preferred embodiments shown in a drawing in which:
Fig.1 presents an example embodiment of the method according to the present invention;
Figs. 2-4 present examples of combined commands;
Fig. 5 presents schematically a structure of a device utilizing the method for controlling the user interface.

### DETAILED DESCRIPTION

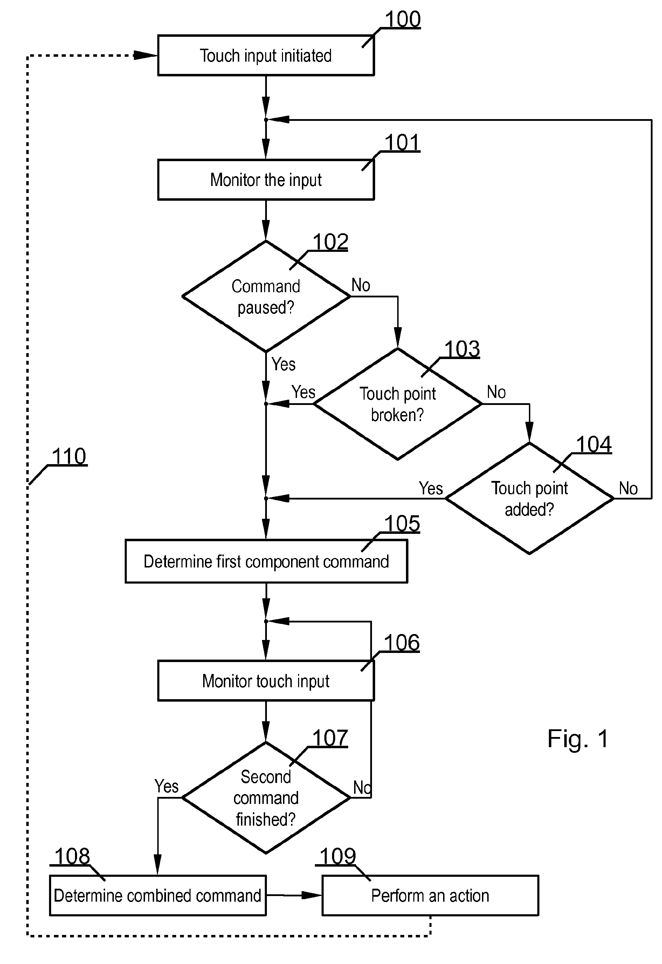

Fig. 1 presents an example embodiment of the method according to the present invention. The method begins at step 100 by receiving an indication that a first touch command has been initiated by the user via the touch interface, such as a single-touch or a multi-touch command, for example a drag command or two-finger scroll command. The method then continues to monitor the execution of the command at step 101, i.e. monitoring whether a touch point is moved, broken or another touch point is added. The breaking or adding of touch points, during monitoring of the command in step 101, is considered as a continuation of the command initiated in step 100 only if the breaking or adding of touch points is part of the command monitored at step 101. While monitoring the command, three conditions are checked:
- it is checked in step 102 whether the command is paused, e.g. a movement of a touch point has stopped; the stop of movement can be indicated when the position of the touch point has not changed or changed less than a threshold value, such as 2 pixels for a predetermined time, such as 0,1 second; the pause indicates an end of the first component command;
- it is checked in step 103 whether any (but preferably not all) of the touch points initiated in step 100 have been broken, wherein the breaks are not considered as a part of the definition of the first component command, but as initiation of the second component command;
- it is checked in step 104 whether any touch points were added, wherein the additions are not considered as a part of the definition of the first component command, but as initiation of the second component command.

In case when any of the events of steps 102-104 has been detected, the method perceives further input from the user as an initiation of a second component command in step 105. The input of the second command is then monitored in step 106 until it is detected that the command is finished in step 107. The command is considered as finished in step 107 upon detecting an event that completes a known definition of a second component command, e.g. a drag command can be recognized as touching a touch point, executed by holding the touch while moving the touch point and finished by breaking the touch point. Therefore, in steps 105-107 the further input from the user, following the completion of the first component command in one of steps 102-104, is monitored in steps 105-107 until a second component command is recognized in step 107.

After the entry of the second component command is finished, a combined command is determined in step 109 that corresponds to the succession of the first component command and the second component command.

If a combined command is detected, an action is performed that is related to that combined command in step 109. For example, a context menu can be displayed to the user in step 109, configured to present a selection of actions regarding the present state of the device at step 109. The present state of the device can be determined as a function of the following variables:
- the type of the first command;
- the type of the second command;
- the position of the touch point at the beginning, end or during the first or second touch command;
- the context of an application executed at the device.

Preferably, the context menu is displayed at the point at which the second command has been finished, but it can be also displayed in other screen positions, such as at a predefined position or at a predefined distance from the point at which the second command has been finished.

Therefore, the method of Fig. 1 allows receiving from the user at least two component commands forming a combined command.

In other embodiments, the method may be extended by receiving more than two component commands, by returning to step 100 after step 104 (line 110).

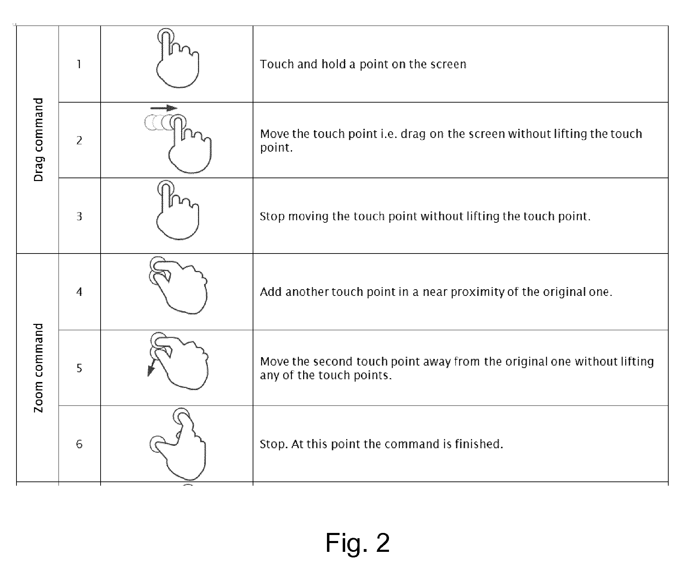

The present invention allows improving a touch user interface with a combined command comprising drag and zoom component commands, as shown in Fig. 2. That combined command can be implemented for example in a music player application with a play list as described in the background section, as follows. The music player application may list music pieces in a queue, each piece constituting a single item on the queue. The user may desire to move one of the items from its current position on the queue to a new position on the queue, for example to the first position on the list. To do so, the user finds the item of interest and touches it with their index finger holding the finger (step 1 of Fig. 2, step 100 of Fig. 1) until the music player application initiates the drag action. Next, the item is moved up towards the first position on the list (step 2 of Fig. 2, step 101 of Fig. 1). Nearing the beginning of the list, the user may notice that the item needs to be moved to a different list then the currently displayed list. The user may stop the motion (step 3 of Fig. 2, step 103 of Fig. 1) and hold the touch point still. The drag corresponds to the first component command. Breaking the touch point would mean finding the item again, which the present invention avoids. The user then touches the screen with their thumb just next to the index finger (step 4 of Fig. 2, step 105 of Fig. 1). The music player application may then display a small shape constituting a representation of a context menu. The shape can be sized so that it spreads from the first touch point to the second touch point. The user then moves the thumb away from the index finger still touching the screen with both fingers (step 5 of Fig. 2, step 106 of Fig. 1). This corresponds to the zoom (pinch-out) command, being the second component command. Moving the thumb finger away zooms in the representation of the context menu. After crossing a certain threshold of the size of the context menu, the music player application assumes the command is finished (step 6 of Fig. 2, step 107 of Fig. 1) and displays the full content of that menu (step 109 of Fig. 1). The user can be now allowed to select an option from the context menu without having to locate and tap or drag the item from the start. The context menu may list other play queues or lists or the like. The user can select one of them to move the present item to that queue or list or the like.

It is possible to allow the user to make further actions after step 6 of Fig. 2 by receiving further component commands.

For example, the user may lift the second finger while still holding the first finger. This allows the user to select an option from the context menu by tapping it with the second finger (wherein the tap command would be recognized by repeating steps 100-104 of Fig. 1).

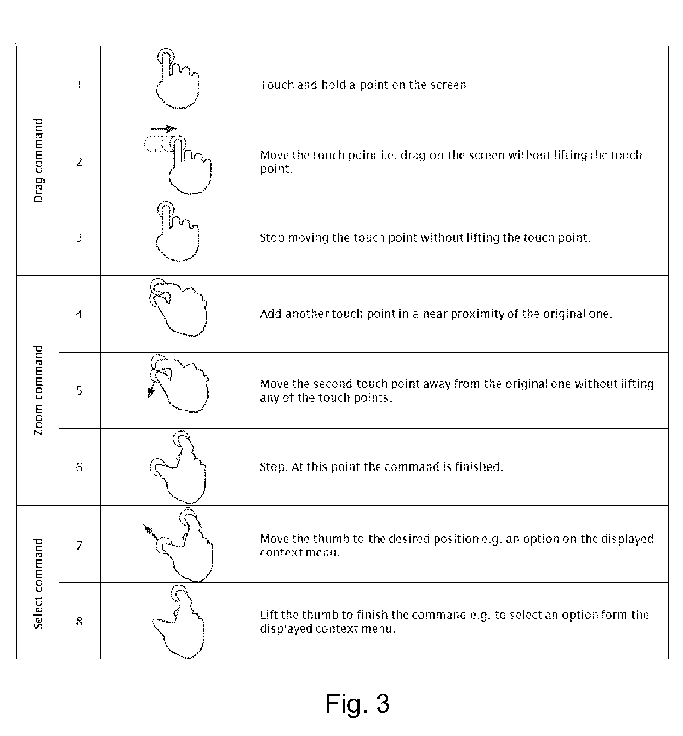

In another example, as shown in Fig. 3 (wherein steps 1-6 are equivalent to that of Fig. 2), the user, after step 6, may move the second finger further to the desired option in the menu (step 7) and select it by lifting the thumb finger (step 8)-herein, the touch and move command would be recognized by repeating steps 100-104 of Fig. 1). In that case, the combined command comprises three component commands: drag, zoom and select.

The actions related to the zoom feature can be adjusted to the parameters of the zoom, e.g. the direction of the zoom.

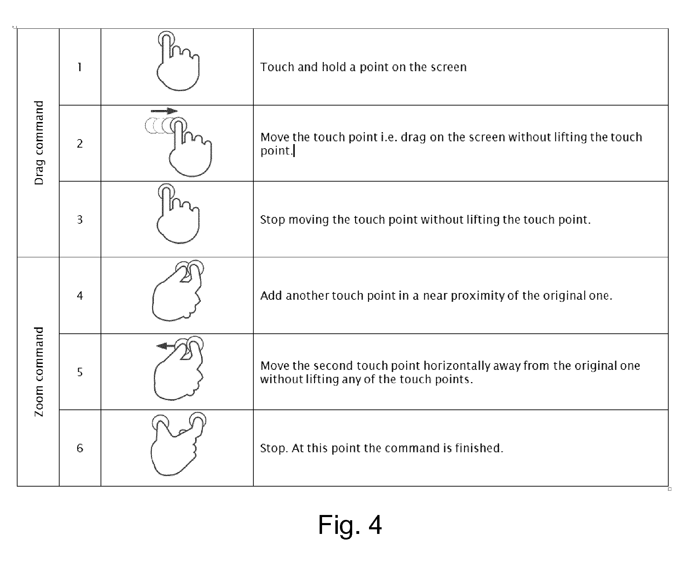

For example, for a vertical zoom command, actions such as shown in Fig. 2 can be performed and for a horizontal zoom command, actions such as shown in Fig. 4 can be performed. Steps 1-3 of Fig. 4 are equivalent to steps 1-3 of Fig. 2. In case a horizontal zoom is input in steps 4-5 and finished in step 6, the application may display a context menu different than that in response to steps 4-6 of Fig. 2, for example a context menu with possible actions for the current item, such as delete, edit or search similar actions.

Therefore, in the example of Fig. 4, the context menu is configured to present a selection of actions regarding the present state of the device (list of play queues or list of actions) as a function of the type of the second command (vertical or horizontal zoom).

Consequently, the application can perform a different action than a display of the aforementioned context menu as a consequence of completion of the second component command. For example, referring to Fig. 2 and Fig. 4, the reaction of the application to the completion of step 6 can be a direct action performed on the element of the interface that is the subject of the component gesture.

Exemplary action may comprise immediate move of a dragged element to a predefined list. Another exemplary reaction to the completion of the aforementioned step 6 of Fig. 2 and Fig. 4 can be copying of the dragged element to the system clipboard. Another exemplary action can be minimizing or hiding or the like of the application showing the main 'desktop' of the device.

Another exemplary reaction of the application to the completion of step 6 of Fig. 2 and Fig. 4 can be changing of the brightness of the display. Such reaction would be particularly useful while using the device outdoors or when lighting conditions change rapidly (e.g. train moving through a tunnel). The present exemplary reaction of the application would allow adjusting of the display to the changing conditions without losing the results of the previously started gestures.

Another exemplary reaction of the application to the completion of step 6 of Fig. 2 and Fig. 4 can be forcing of the change in the orientation of the device's screen.

The method presented herein allows advancing of the process of manipulation of objects displayed by and controlled with a multi-touch screen device by eliminating redundant actions in cases when either the conditions of the view change in the process of a dragging command or the user decides upon other actions then originally intended. The method is particularly useful in user interfaces where it is difficult to find the object due to a large number of similar objects or in applications where the selection of the object is difficult due to e.g. a small size of the object.

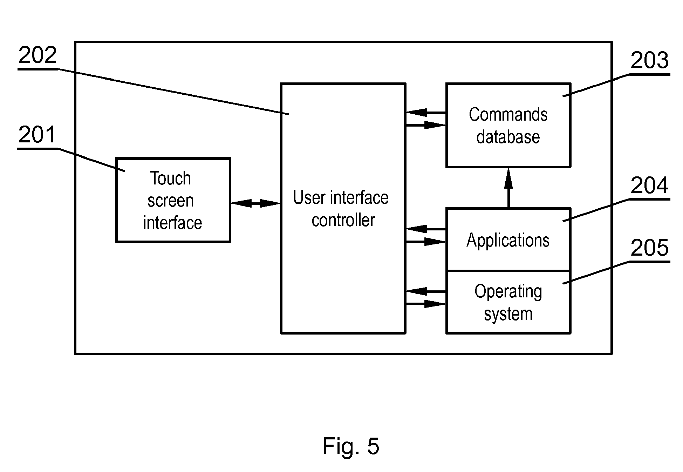

Fig. 5 shows schematically a structure of a device 200 utilizing the method for controlling the user interface as described above. The device comprises a touch screen interface 201 configured to receive touch input from the user and to display graphical data. The touch screen interface 201 (also known as a touch-sensitive display) may be of any suitable type, such as a capacitive, resistive, infrared, or surface acoustic wave (SAW) touch screen. A user interface controller 202 is configured to operate the method according to the invention, i.e. to control the display of various graphical objects on the screen (in particular, to display the context menu) in response to the touch input received via the interface 201. The context menu may be displayed as OSD (on-screen display) layers, pop-up windows or any other suitable GUI object. The user interface controller 202 uses a touch commands database 203, which stores definitions of touch commands, including the definitions of component commands and combined commands. The commands database 203 will typically be stored in a non-volatile memory accessible to the user interface controller 202. The non-volatile memory may be internal or external, for example accessible by means of a network connection. The operation of the device 200 is controlled by an operating system 204 and various applications 205.

The device can be any type of a device comprising a touch screen, such as a personal computer, a smartphone, a tablet, a laptop, a television set etc.

It can be easily recognized, by one skilled in the art, that the aforementioned method for controlling the touch screen user interface may be performed and/or controlled by one or more computer programs. Such computer programs are typically executed by utilizing the computing resources of the device. The computer programs can be stored in a non-volatile memory, for example a flash memory or in a volatile memory, for example RAM and are executed by the processing unit. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for controlling a touch screen user interface, comprising the steps of:
- receiving (101) an indication that a touch input has been initiated via the user interface;
- monitoring (102) the touch input until the touch is paused (103), broken (104) or a new touch point is added (105) to recognize a first component command;
- continuing to monitor (106) further touch input to recognize (107) a second component command (107);
- determining (108) a combined command related to the first component command and the second component command; and
- performing (109) an action associated with the determined combined command.

2. The method according to claim 1, wherein the action associated with the determined combined command is selected as a function of at least one variables selected from the group consisting of: the position of the touch point at the beginning, end or during the first or second touch command; the relative position of any two or more touch points at the beginning, end or during the first or second touch command; the context of an application executed at the device.

3. The method according to any of previous claims, wherein the pausing (102) of a touch or the breaking (104) of a touch point or addition of a new touch point (105) are considered as initiation (105) of the second component command and form part of the second component command.

4. The method according to any of previous claims, further comprising, after performing (109) the action associated with the determined combined command, receiving an indication that a further touch input has been initiated via the user interface and monitoring the further touch input until the touch is paused, broken or a new touch point is added.

5. The method according to any of previous claims, wherein the first component command is a single touch command.

6. The method according to any of claims 1-4, wherein the first component command is a multi-touch command.

7. The method according to any of previous claims, wherein the second component command is a single touch command.

8. The method according to any of claims 1-6, wherein the second component command is a multi-touch command.

9. A computer program comprising program code means for performing all the steps of the method according to any of claims 1-8 when said program is run on a computer.

10. A computer readable medium storing computer-executable instructions performing all the steps of the method according to any of claims 1-8 when executed on a computer.

11. A device comprising a touch screen user interface (201) operable by a user interface controller (202), **characterized in that** the user interface controller is configured to execute all the steps of the method according to any of claims 1-8.
